# EUROPÄISCHE PATENTSCHRIFT

(11) **EP 3 557 113 B1**
(45) Veröffentlichungstag und Bekanntmachung des Hinweises auf die Patenterteilung: **25.06.2025**
(21) Anmeldenummer: 18168556.1
(22) Anmeldetag: 20.04.2018
(51) Int. Cl.: F16P 3/08, H01H 47/00

(54) **SICHERHEITSSCHALTER**
SAFETY SWITCH
COMMUTATEUR DE SÉCURITÉ

(43) Veröffentlichungstag der Anmeldung: 23.10.2019
(73) Patentinhaber: EUCHNER GmbH + Co. KG, 70771 Leinfelden-Echterdingen (DE)
(72) Erfinder: Siefert, Timo, 70771 Leinfelden-Echterdingen (DE); Joos, Melissa, 70771 Leinfelden-Echterdingen (DE); Hahn, Frederic, 40724 Hilden (DE); Zeiler, Gerd, 70771 Leinfelden-Echterdingen (DE)
(74) Vertreter: Ruckh, Rainer Gerhard

(56) Entgegenhaltungen:
- DE-A1- 102005 014 122
- DE-A1- 102010 035 765
- DE-A1- 102012 103 015

## Beschreibung

Die Erfindung betrifft ein Sicherheitssystem mit einem Sicherheitsschalter.

Sicherheitsschalter werden im Bereich der Sicherheitstechnik eingesetzt, wobei diese insbesondere zur Gefahrenbereichsabsicherung an Anlagen eingesetzt werden. Der Begriff Anlagen umfasst insbesondere auch Maschinen, Arbeitsgeräte und dergleichen.

Beispielsweise können derartige Sicherheitsschalter mit Transpondern arbeiten, wobei anhand der Transpondersignale erkannt werden kann, ob eine trennende Schutzeinrichtung wie zum Beispiel eine Tür als Zugang zu einer Anlage geschlossen ist oder nicht.

Ein derartiger Sicherheitsschalter weist generell eine Ein-/Ausgangsstruktur mit Eingängen und Ausgängen auf, die insbesondere redundant ausgebildet sein kann. Der Sicherheitsschalter generiert entsprechend seiner Überwachungsfunktion, insbesondere in Abhängigkeit des Transpondersignals, ein Schaltsignal, das an eine Steuerung ausgegeben wird, mit dem die zu überwachende Anlage gesteuert wird. Wird mit dem Sicherheitsschalter ein gefahrloser Zustand detektiert, insbesondere, dass eine zu überwachende Tür geschlossen ist und so den Zugang zu einem Gefahrenbereich versperrt, in dem zum Beispiel die Anlage angeordnet ist, wird ein Schaltsignal mit dem Schaltzustand "eingeschalteter Zustand", entsprechend einer aktiven Sicherheitsbedingung, das heißt einem Freigabesignal, generiert. Empfängt die Steuerung vom Sicherheitsschalter dieses Freigabesignal, kann die Steuerung die Anlage in Betrieb nehmen beziehungsweise in Betrieb lassen. Wird mit dem Sicherheitsschalter jedoch eine offene Tür registriert, generiert dieser ein Schaltsignal mit dem Schaltzustand "ausgeschalteter Zustand", entsprechend einer nicht aktiven Sicherheitsbedingung. In diesem Fall schaltet der Sicherheitsschalter zur Vermeidung gefahrbringender Zustände die Anlage aus.

Einem derartigen Sicherheitsschalter kann insbesondere auch eine Starttaste zugeordnet sein. Durch eine manuelle Bedienung der Starttaste kann ein Quittierungssignal für die Freigabe der Anlage generiert sein. Ein Benutzer, der die Starttaste betätigt, signalisiert mit dem Quittierungssignal, dass sich keine Person im Gefahrenbereich aufhält. Damit wird eine weitere Sicherheitsfunktion zusätzlich zu der Überwachungsfunktion des Sicherheitsschalters bereitgestellt. Eine Freigabe des Betriebs der Anlage erfolgt nämlich nur dann, wenn der Sicherheitsschalter ein Freigabesignal für die Anlage generiert und wenn ein Quittierungssignal mit der Starttaste vorliegt. Damit können Gefahrensituationen bei der Freigabe des Betriebs der Anlage mit hoher Sicherheit ausgeschlossen werden.

Die DE 10 2012 103 015 A1 betrifft eine Sicherheitsschaltvorrichtung zum fehlersicheren Ein- oder Ausschalten einer technischen Anlage, mit einer fehlersicheren Steuer/Auswerteeinheit mit einem Eingang zum Aufnehmen eines Eingangssignals. Die fehlersichere Steuer/Auswerteeinheit ist ausgebildet das Eingangssignal zu verarbeiten, um in Abhängigkeit davon zu einem Ausgangssignal-Zeitpunkt ein Ausgangssignal zum Ein- oder Ausschalten der technischen Anlage zu erzeugen. Die fehlersichere Steuer/Auswerteeinheit weist einen ersten Ausgang auf zum Übermitteln des Ausgangssignals an einen elektromechanischen Schalter. Der elektromechanische Schalter weist einen Arbeitskontakt zum Schalten eines Laststromkreises der technischen Anlage und einen zwangsgeführten Hilfskontakt in einem Hilfskontaktstrompfad, über den bei einer angelegten definierten Spannung ein Strom geführt werden kann zum Überprüfen der Schaltstellung des Arbeitskontakts, auf. In dem Hilfstaktstrompfad ist ein Schaltelement angeordnet. Die fehlersichere Steuer/Auswerteeinheit ist ausgebildet zum Erzeugen eines Schaltsignals zu einem Schaltsignal-Zeitpunkt mit einem zeitlichen Abstand zu dem Ausgangssignal-Zeitpunkt, wobei die fehlersichere Steuer/Auswerteeinheit einen zweiten Ausgang aufweist zum Übermitteln des Schaltsignals an das Schaltelement, das ausgebildet ist bei Empfang des Schaltsignals den Strom durch den Hilfskontaktstrompfad zu schalten.

Die DE 10 2010 035 765 A1 betrifft eine Vorrichtung zum Überwachen des Zustandes einer Schutzeinrichtung einer Maschine, insbesondere Sicherheitsschalter. Die Vorrichtung dient zum Überwachen des Zustandes einer Schutzeinrichtung einer Maschine, wobei die Vorrichtung einen Schalterkopf und einem Betätiger aufweist, die in Wechselwirkung miteinander bringbar sind und dadurch die Vorrichtung steuern, wobei die Vorrichtung einen ersten Betriebsmodus aufweist, in dem beim Wechselwirken von Betätiger und Schalterkopf an einem Ausgang der Vorrichtung ein Freigabesignal ausgegeben wird. Die Vorrichtung ist mittels eines mit dem Schalterkopf in Wirkverbindung bringbaren Sperreinsatzes in einen zweiten Betriebsmodus überführbar. In dem zweiten Betriebsmodus wird beim Wechselwirken von Betätiger und Schalterkopf am Ausgang der Vorrichtung kein Freigabesignal ausgegeben.

Die DE 10 2005 014 122 A1 betrifft eine Sicherheitsschaltvorrichtung zum sicheren Abschalten eines elektrischen Verbrauchers mit zumindest einem Eingang zum Anschließen eines Meldegerätes. Ferner ist eine Auswerte- und Steuereinheit vorhanden sowie zumindest ein Schaltelement, das von der Auswerte- und Steuereinheit ansteuerbar ist, um einen Stromversorgungspfad zu dem Verbraucher zu unterbrechen. Die Auswerte- und Steuereinheit ist dazu ausgebildet, Funktionstests zu definierten Zeitpunkten durchzuführen, um zumindest eine Schaltfunktion des zumindest einen Schaltelements zu überprüfen. Der zumindest eine Eingang ist zum Anschließen des Meldegerätes außerdem als Eingang zum Zuführen einer Versorgungsspannung ausgebildet, die für den Betrieb des zumindest einen Schaltelements erforderlich ist.

Der Erfindung liegt die Aufgabe zugrunde, ein Sicherheitssystem mit erweiterter Funktionalität bereitzustellen.

Zur Lösung dieser Aufgabe sind die Merkmale des Anspruchs 1 vorgesehen. Vorteilhafte Ausführungsformen und zweckmäßige Weiterbildungen sind in den abhängigen Ansprüchen beschrieben.

Die Erfindung betrifft ein Sicherheitssystem mit einem Sicherheitsschalter mit einer Ein-/Ausgangsstruktur und mit Mitteln zur Generierung eines Schaltsignals für die Freigabe des Betriebs einer Anlage. Durch manuelle Betätigung einer Starttaste ist ein Quittierungssignal für die Freigabe der Anlage generiert. Eine Freigabe des Betriebs der Anlage erfolgt nur dann, wenn der Sicherheitsschalter ein Freigabesignal für die Anlage generiert und wenn ein Quittierungssignal mit der Starttaste vorliegt. Die Ein-/Ausgangsstruktur bildet Anschlussmittel zum Anschluss der Starttaste aus. Die Anschlussmittel werden im Sicherheitsschalter selbsttätig erkannt. Bei Betrieb des Sicherheitsschalters liegen mit oder ohne Starttaste unterschiedliche Verdrahtungen von Eingängen und/oder Ausgängen der Ein-/Ausgangsstruktur vor, welche im Sicherheitsschalter erfasst werden. Im Sicherheitsschalter wird während einer Inbetriebnahmephase der Anschluss der Starttaste erkannt.

Die Einbindung der Starttaste in den Betrieb des Sicherheitsschalters erfolgt generell dadurch, dass das in der Starttaste generierte Quittierungssignal im Sicherheitsschalter zur Verfügung steht und von diesem mit oder ohne eigene Auswertung an eine weitere Einheit, insbesondere an eine übergeordnete Steuerung, die den Betrieb der Anlage steuert, weitergibt.

Durch die automatische Erkennung des Anschlusses der Starttaste durch den Sicherheitsschalter wird somit nicht nur ein automatisierter Ablauf für den Sicherheitsschalter selbst, sondern auch für das gesamte Sicherheitssystem, in welches der Sicherheitsschalter eingebunden ist, erzielt.

Erfindungsgemäß erfolgt die Erkennung, ob eine Starttaste an dem Sicherheitsschalter angeschlossen ist oder nicht, durch die Erfassung spezifischer Anschlussmittel an der Ein-/Ausgangsstruktur des Sicherheitsschalters. Je nachdem ob eine Starttaste vorhanden ist oder nicht, sind unterschiedliche Anschlussmittel an der Ein-/Ausgangsstruktur, insbesondere unterschiedliche Verdrahtungen an Ein- und Ausgängen der Ein-/Ausgangsstruktur vorhanden, die als Kontrollsignale im Sicherheitsschalter erfassbar sind, wobei anhand dieser Kontrollsignale sicher unterschieden werden kann, ob eine Starttaste vorhanden ist oder nicht.

Besonders vorteilhaft ist als Verdrahtung zum Anschluss der Starttaste ein Zwischenstecker vorgesehen.

Der an Ein- und/oder Ausgängen der Ein-/Ausgangsstruktur des Sicherheitsschalters angeschlossene Zwischenstecker kann anhand im Sicherheitsschalter erhaltener Kontrollsignale eindeutig identifiziert werden, wodurch der Anschluss der Starttaste sicher erkannt werden kann.

Erfindungsgemäß wird während einer Inbetriebnahmephase der Anschluss der Starttaste erkannt. Diese Inbetriebnahmephase ist insbesondere die Hochlaufphase bei jedem Gerätestart vor Beginn der Normalbetriebsphase, das heißt dem Arbeitsbetrieb.

Insbesondere generiert dieser während der Inbetriebnahmephase ein Kontrollsignal. In Abhängigkeit der Rücklesbarkeit des Kontrollsignals wird der Anschluss der Starttaste erfasst.

Diese Ausführungsform ist deshalb vorteilhaft, da bereits vor der Aufnahme des Arbeitsbetriebs während der Inbetriebnahmephase im Sicherheitsschalter selbsttätig festgestellt wird, ob diesem eine Starttaste zugeordnet ist. Der Sicherheitsschalter stellt darauf selbsttätig seine Funktion ein und ist dann während des folgenden Arbeitsbetriebs ohne zusätzlichen Konfigurations- oder Parametriervorgänge einsatzfähig.

Besonders vorteilhaft wird zur Erkennung des Anschlusses einer Starttaste das vorhandene, für die Inbetriebnahme des Sicherheitsschalters genutzte Kontrollsignal genutzt, wodurch der Aufwand der Signalverarbeitung im Sicherheitsschalter zur Erkennung des Anschlusses des Sicherheitsschalters gering gehalten werden kann. Hierbei wird ausgenutzt, dass das in den Sicherheitsschalter rückgelesene Kontrollsignal aufgrund der charakteristischen Verdrahtung der Starttaste in eindeutiger Weise abhängig davon ist, ob eine Starttaste vorhanden ist oder nicht.

Prinzipiell kann nur ein einzelner Sicherheitsschalter vorgesehen sein, insbesondere als Bestandteil eines Sicherheitssystems zur sicheren Freigabe des Betriebs einer Anlage.

Gemäß einer vorteilhaften Ausführungsform der Erfindung ist als Bestandteil eines Sicherheitssystems eine Reihenschaltung von Sicherheitsschaltern vorgesehen. Mit einer derartigen Mehrfachanordnung von Sicherheitsschaltern können auch komplexe Überwachungsfunktionen realisiert werden.

Zweckmäßig ist bei einer solchen Reihenschaltung jedem Sicherheitsschalter ein Stecker zugeordnet, wodurch der Sicherheitsschalter an diese Reihenschaltung angeschlossen ist. Anstelle eines Steckers kann auch eine direkte Verdrahtung vorgesehen sein.

Dieser Stecker ist insbesondere als Y-Stecker derart ausgebildet, dass dieser eine erste Anschlussseite zum Anschluss des Sicherheitsschalters und zwei weitere Anschlussseiten aufweist, wobei je eine dieser Anschlussseiten zum Anschluss an den vorhergehenden und nachfolgenden Y-Stecker der Reihenschaltung dient.

Ein Sicherheitsschalter ist dann bei Betrieb ohne Starttaste direkt an den Stecker angeschlossen. Dabei ist im Stecker eine einen Eingang und einen Ausgang des Sicherheitsschalters überbrückende Brücke vorhanden.

Die Brücke bildet eine charakteristische Verdrahtung, anhand derer der Sicherheitsschalter erkennen kann, dass keine Starttaste vorhanden ist.

Dabei ist durch die Brücke ein über den Eingang in den Sicherheitsschalter ein Kontrollsignal rückgelesen, das den direkten Anschluss des Steckers an den Sicherheitsschalter signalisiert.

Auf diese Weise kann einfach und sicher im Sicherheitsschalter erkannt werden, dass keine Starttaste vorhanden ist.

Bei einem Betrieb mit Starttaste ist diese zwischen einem Sicherheitsschalter und dessen zugeordneten Stecker, insbesondere Y-Stecker, angeschlossen. Bei einem derartigen Anschluss wird vorzugsweise ein Zwischenstecker eingesetzt, wodurch die Brücke im Stecker umgangen wird.

Dabei ist die Starttaste mittels des Zwischensteckers an einen Eingang des Sicherheitsschalters angeschlossen. Am Eingang ist ein Kontrollsignal generiert, das den Anschluss der Starttaste signalisiert.

Der Anschluss des Zwischensteckers bildet somit eine charakteristische Verdrahtung, die durch Rücklesen des in Abhängigkeit dieser Verdrahtung generierten Kontrollsignals im Sicherheitsschalter eindeutig identifiziert werden kann, wodurch der Anschluss der Starttaste sicher erkannt wird.

Die Erfindung wird im Folgenden anhand der Zeichnungen erläutert. Es zeigen:
- Figur 1:: Schematische Darstellung einer Reihenschaltung von Sicherheitsschaltern.
- Figur 2:: Reihenschaltung gemäß Figur 1 mit den Sicherheitsschaltern zugeordneten Starttasten.
- Figur 3:: Externe Verdrahtung eines Eingangs und Ausgangs eines Sicherheitsschalters bei Betrieb ohne Starttaste.
- Figur 4:: Externe Verdrahtung eines Eingangs und Ausgangs.

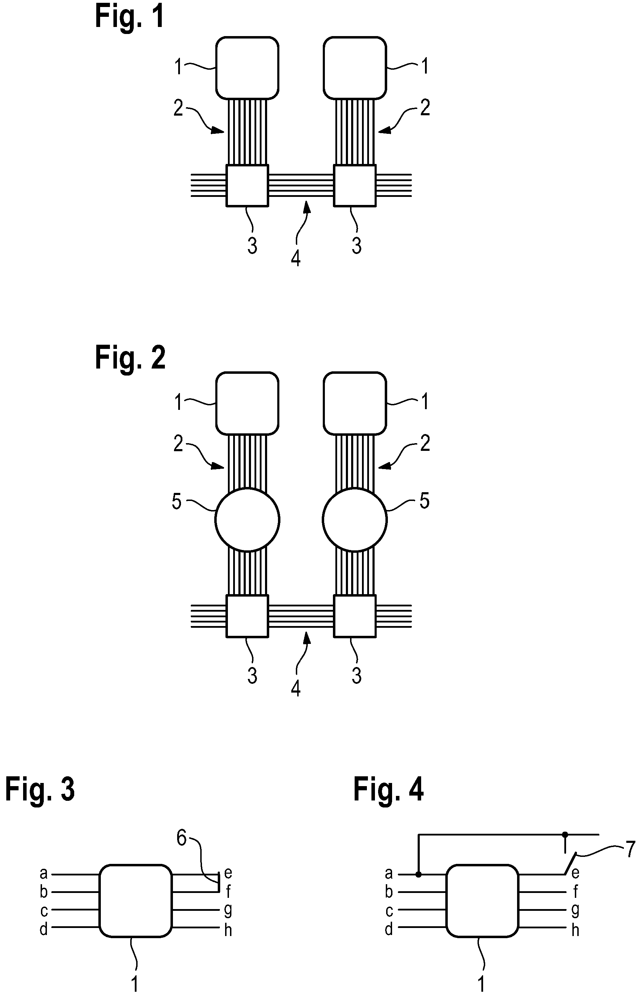

Figur 1 zeigt stark schematisiert eine Reihenschaltung bestehend aus einer Mehrfachanordnung von Sicherheitsschaltern 1.

Figur 1 zeigt dabei eine Reihenschaltung von zwei identisch ausgebildeten Sicherheitsschaltern 1. Die Sicherheitsschalter 1 müssen jedoch nicht zwingend identisch sein. Generell kann die Reihenschaltung auch eine andere Anzahl von Sicherheitsschaltern 1 aufweisen. Schließlich kann auch ein einzelner Sicherheitsschalter 1 eingesetzt werden.

Die Sicherheitsschalter 1 werden im Bereich der Sicherheitstechnik eingesetzt. Insbesondere wird mit einem Sicherheitsschalter 1 überwacht, ob eine trennende Schutzeinrichtung, wie zum Beispiel eine Tür, den Zugang zu einem Gefahrenbereich, in welchem eine gefahrbringende Anlage angeordnet ist, geschlossen ist. Die Schließstellung der Tür kann dabei anhand von Transpondersignalen kontrolliert werden. Dabei kann ein Transponder in einem Betätiger angeordnet sein, der an der Tür angeordnet ist und mit dieser beweglich ist. Der Sicherheitsschalter 1 ist dann an einem den Zugang begrenzenden Rahmen angeordnet. Wenn sich die Tür in der Schließstellung befindet, ist der Transponder im Lesebereich eines im Sicherheitsschalter 1 angeordneten RFID-Lesegeräts, so dass dieses die Transpondersignale des Transponders empfangen kann.

Wie Figur 1 zeigt, weist jeder Sicherheitsschalter 1 eine achtpolige Ein-/Ausgangsstruktur auf, von welcher eine Leitungsanordnung 2 mit acht Leitungen auf einen Stecker 3 geführt ist, der als Y-Stecker, das heißt als Dreiwegweiche ausgebildet ist. Im Y-Stecker werden die Anschlüsse an den Stecker 3 in Anschlüsse für die Stecker 3 untereinander umgesetzt. Dabei weist der Stecker 3 zwei Anschlussseiten mit je fünf Anschlüssen auf, wobei jeweils ein Stecker 3 mit einer Anschlussseite an den vorhergehenden Stecker 3 und mit der weiteren Anschlussseite an dem nachfolgenden Stecker 3 anschließbar ist, so dass die Stecker 3 mit einer Leitungsanordnung 4 von fünf Leitungen miteinander verbunden sind. Dieses Anschlussschema ist nicht zwingend, insbesondere können jeweils der Sicherheitsschalter 1 und auch der zugeordnete Stecker 3 andere Anschlussbilder aufweisen. Weiterhin kann anstelle eines Steckers 3 auch eine Verdrahtung vorgesehen sein.

Figur 2 zeigt eine Variante der Reihenschaltung, die gegenüber der Reihenschaltung gemäß Figur 1 dahingehend erweitert ist, dass zwischen einem Sicherheitsschalter 1 und dem Stecker 3 eine Starttaste 5 angeordnet ist.

Jede Starttaste 5 kann von einem Benutzer manuell betätigt werden, wodurch ein Quittierungssignal generiert wird, das dem zugeordneten Sicherheitsschalter 1 zugeführt wird. Mit dem Quittierungssignal quittiert der Benutzer beispielsweise, dass sich niemand im Gefahrenbereich aufhält.

Das Vorhandensein des Quittierungssignals jeder Starttaste 5 ist neben einem im Sicherheitsschalter 1 generierten Freigabesignal eine notwendige Bedingung dafür, dass der Betrieb der Anlage gestartet wird.

Die Quittierungssignale werden mit den in dem Sicherheitsschalter 1 generierten Freigabesignalen verknüpft oder gemeinsam über die Reihenschaltung weitergegeben und damit der übergeordneten Steuerung zur Verfügung gestellt. Die Steuerung gibt den Betrieb der Anlage nur dann frei, wenn jeder Sicherheitsschalter 1 ein Freigabesignal generiert und mit jeder Starttaste 5 ein Quittierungssignal generiert wurde.

Figur 3 zeigt einen Sicherheitsschalter 1, der in die Reihenschaltung gemäß Figur 1 eingebunden ist.

Die achtpolige Ein-/Ausgangsstruktur umfasst Anschlüsse a, d für eine Versorgungsspannung, zwei Eingänge b, c als redundante Eingangsstruktur, zwei Ausgänge f, g als redundante Ausgangsstruktur, einen Kommunikationsanschluss h und einen Starteingang e. Die Eingänge b, c sind Sicherheitseingänge, über welche Schaltsignale vom vorhergehenden Sicherheitsschalter 1 eingelesen werden. Entsprechend sind die Ausgänge f, g Sicherheitsausgänge zur Ausgabe von Schaltsignalen an den folgenden Sicherheitsschalter 1.

Die Reihenschaltung gemäß Figur 1 wird ohne Starttaste 5 betrieben, so dass der Sicherheitsschalter 1 direkt an den Stecker 3 angeschlossen ist. Im Stecker 3 ist eine Brücke 6 vorgesehen, die, wie Figur 3 zeigt, den Ausgang f und den Starteingang e überbrückt. Das während der Inbetriebnahmephase generierte Kontrollsignal wird über die Brücke 6 in den Starteingang e rückgelesen.

Figur 4 zeigt den Sicherheitsschalter 1 gemäß Figur 3 für die Einbindung in die Reihenschaltung gemäß Figur 2, das heißt in diesem Fall ist zwischen dem Sicherheitsschalter 1 und dem Stecker 3 eine Starttaste 5 vorhanden.

Der Anschluss der Starttaste 5 an den Sicherheitsschalter 1 erfolgt über einen Zwischenstecker 7, der an den Starteingang e und an den Versorgungsspannungsanschluss a angeschlossen ist. Mit diesem Zwischenstecker 7 wird die Brücke 6 im Stecker 3 umgangen.

In diesem Fall wird während der Inbetriebnahmephase dort durch den Anschluss des Zwischensteckers 7 ein statisches Signal, insbesondere ein Low-Signal als Kontrollsignal erhalten. Dieses Kontrollsignal unterscheidet sich eindeutig von dem zyklisch variierenden Kontrollsignal, wenn eine Starttaste 5 angeschlossen ist.

Somit wird im Sicherheitsschalter 1 während der Inbetriebnahmephase anhand der Kontrollsignale eindeutig erkannt, ob eine Starttaste 5 vorhanden ist oder nicht. Der Sicherheitsschalter 1 kann dann, wenn die Starttaste 5 angeschlossen ist, diese in den Betrieb einbinden, ohne dass hierfür separate Konfigurations- oder Parametriervorgänge notwendig sind, das heißt der Sicherheitsschalter 1 kann ohne weiteres von der Inbetriebnahmephase in den Arbeitsbetrieb wechseln.

### Bezugszeichenliste

- (1): Sicherheitsschalter
- (2): Leitungsanordnung
- (3): Stecker
- (4): Leitungsanordnung
- (5): Starttaste
- (6): Brücke
- (7): Zwischenstecker

## Patentansprüche

1. Sicherheitssystem mit einem Sicherheitsschalter (1) mit einer Ein-/Ausgangsstruktur und mit Mitteln zur Generierung eines Schaltsignals für die Freigabe des Betriebs einer Anlage, und mit einer Starttaste (5), wobei durch manuelle Betätigung der Starttaste (5) ein Quittierungssignal für die Freigabe der Anlage generiert ist, wobei eine Freigabe des Betriebs der Anlage nur dann erfolgt, wenn der Sicherheitsschalter (1) ein Freigabesignal für die Anlage generiert und wenn ein Quittierungssignal mit der Starttaste vorliegt, **dadurch gekennzeichnet, dass** die Ein-/Ausgangsstruktur Anschlussmittel zum Anschluss der Starttaste (5) ausbildet, und dass die Anschlussmittel im Sicherheitsschalter (1) selbsttätig erkannt werden, dass bei Betrieb des Sicherheitsschalters (1) mit oder ohne Starttaste (5) unterschiedliche Verdrahtungen von Eingängen und/oder Ausgängen der Ein-/Ausgangsstruktur vorliegen, welche im Sicherheitsschalter (1) erfasst werden, und dass im Sicherheitsschalter (1) während einer Inbetriebnahmephase der Anschluss der Starttaste (5) erkannt wird.

2. Sicherheitssystem nach Anspruch 1, **dadurch gekennzeichnet, dass** bei dem Sicherheitsschalter (1) als Verdrahtung zum Anschluss der Starttaste (5) ein Zwischenstecker (7) vorgesehen ist.

3. Sicherheitssystem nach einem der Ansprüche 1 oder 2, **dadurch gekennzeichnet, dass** der Sicherheitsschalter (1) während der Inbetriebnahmephase ein Kontrollsignal generiert, wobei in Abhängigkeit der Rücklesbarkeit des Kontrollsignals der Anschluss der Starttaste (5) erfasst wird.

4. Sicherheitssystem nach einem der Ansprüche 1 bis 3, **dadurch gekennzeichnet, dass** dieses eine Reihenschaltung von mehreren Sicherheitsschaltern (1) aufweist.

5. Sicherheitssystem nach Anspruch 4, **dadurch gekennzeichnet, dass** dem Sicherheitsschalter (1) ein Stecker (3) oder eine Verdrahtung zum Anschluss an die Reihenschaltung zugeordnet ist.

6. Sicherheitssystem nach Anspruch 5, **dadurch gekennzeichnet, dass** der Sicherheitsschalter (1) bei Betrieb ohne Starttaste (5) direkt an den Stecker (3) angeschlossen ist, wobei im Stecker (3) oder in der Verdrahtung eine einen Eingang und einen Ausgang des Sicherheitsschalters (1) überbrückende Brücke (6) vorhanden ist.

7. Sicherheitssystem nach den Ansprüchen 3 und 6, **dadurch gekennzeichnet, dass** durch die Brücke (6) über den Eingang in den Sicherheitsschalter (1) das Kontrollsignal rückgelesen ist, das den direkten Anschluss des Steckers (3) oder der Verdrahtung an den Sicherheitsschalter (1) signalisiert.

8. Sicherheitssystem nach Anspruch 5, **dadurch gekennzeichnet, dass** zwischen dem Sicherheitsschalter (1) und dem Stecker (3) oder der Verdrahtung eine Starttaste (5) angeschlossen ist.

9. Sicherheitssystem nach den Ansprüchen 2 und 8, **dadurch gekennzeichnet, dass** die Starttaste (5) mittels des Zwischensteckers (7) an einen Eingang des Sicherheitsschalters (1) angeschlossen ist, wobei am Eingang ein Kontrollsignal generiert ist, das den Anschluss der Starttaste (5) signalisiert.

10. Sicherheitssystem nach Anspruch 6, **dadurch gekennzeichnet, dass** der Zwischenstecker (7) eine Umgehung der Brücke (6) des Steckers (3) oder der Verdrahtung ausbildet.

## Claims

1. Safety system with a safety switch (1) with an input/output structure and with means for generating a switching signal for enabling the operation of a system, and with a start button (5), wherein an acknowledgement signal for enabling the system is generated by manual actuation of the start button (5), wherein the operation of the system is only enabled when the safety switch (1) generates an enable signal for the system and when an acknowledgement signal is present with the start button, **characterised in that** the input/output structure forms connection means for connecting the start button (5), and **in that** the connection means are automatically detected in the safety switch (1), **in that** during operation of the safety switch (1) with or without the start button (5) there are different wirings of inputs and/or outputs of the input/output structure, which are detected in the safety switch (1), and **in that** the connection of the start button (5) is detected in the safety switch (1) during a commissioning phase.

2. Safety system according to claim 1, **characterised in that** an adapter plug (7) is provided in the safety switch (1) as wiring for connecting the start button (5).

3. Safety system according to one of claims 1 or 2, **characterised in that** the safety switch (1) generates a control signal during the start-up phase, the connection of the start button (5) being detected as a function of the read-back capability of the control signal.

4. Safety system according to one of claims 1 to 3, **characterised in that** this has a series connection of several safety switches (1).

5. Safety system according to claim 4, **characterised in that** a plug (3) or wiring for connection to the series connection is assigned to the safety switch (1).

6. Safety system according to claim 5, **characterised in that** the safety switch (1) is connected directly to the plug (3) during operation without a start button (5), a bridge (6) bridging an input and an output of the safety switch (1) being present in the plug (3) or in the wiring.

7. Safety system according to claims 3 and 6, **characterised in that** the jumper (6) reads back the control signal via the input to the safety switch (1), which signals the direct connection of the plug (3) or the wiring to the safety switch (1).

8. Safety system according to claim 5, **characterised in that** a start button (5) is connected between the safety switch (1) and the plug (3) or the wiring.

9. Safety system according to claims 2 and 8, **characterised in that** the start button (5) is connected to an input of the safety switch (1) by means of the intermediate plug (7), a control signal being generated at the input which signals the connection of the start button (5).

10. Safety system according to claim 6, **characterised in that** the intermediate plug (7) forms a bypass of the bridge (6) of the plug (3) or the wiring.

## Revendications

1. Système de sécurité avec un commutateur de sécurité (1) avec une structure d'entrée/ sortie et avec des moyens pour générer un signal de commutation pour activer le fonctionnement d'un système, et avec un bouton de démarrage (5), dans lequel un signal d'acquittement pour activer le système est généré par l'actionnement manuel du bouton de démarrage (5), dans lequel le fonctionnement du système n'est activé que lorsque le commutateur de sécurité (1) génère un signal d'activation pour le système et lorsqu'un signal d'acquittement est présent avec le bouton de démarrage, **caractérisé par le fait que** la structure d'entrée/sortie forme des moyens de connexion pour connecter le bouton de démarrage (5) et que les moyens de connexion sont automatiquement détectés dans le commutateur de sécurité (1), **par le fait que** pendant le fonctionnement du commutateur de sécurité (1) avec ou sans le bouton de démarrage (5), il y a différents câblages d'entrées et/ou de sorties de la structure d'entrée/sortie, qui sont détectés dans le commutateur de sécurité (1), et **par le fait que** la connexion du bouton de démarrage (5) est détectée dans le commutateur de sécurité (1) au cours d'une phase de mise en service.

2. Système de sécurité selon la revendication 1, **caractérisé par le fait qu'**une fiche d'adaptation (7) est prévue dans le commutateur de sécurité (1) comme câblage pour connecter le bouton de démarrage (5).

3. Système de sécurité selon l'une des revendications 1 ou 2, **caractérisé par le fait que** le commutateur de sécurité (1) génère un signal de commande pendant la phase de démarrage, la connexion du bouton de démarrage (5) étant détectée en fonction de la capacité de relecture du signal de commande.

4. Système de sécurité selon l'une des revendications 1 à 3, **caractérisé par** une connexion en série de plusieurs commutateurs de sécurité (1).

5. Système de sécurité selon la revendication 4, **caractérisé par le fait que** le commutateur de sécurité (1) est équipé d'une fiche (3) ou d'un câblage pour la connexion à la connexion en série.

6. Système de sécurité selon la revendication 5, **caractérisé par le fait que** le commutateur de sécurité (1) est connecté directement à la fiche (3) pendant le fonctionnement sans bouton de démarrage (5), un pont (6) une entrée et une sortie du commutateur de sécurité (1) étant présent dans la fiche (3) ou dans le câblage.

7. Système de sécurité selon les revendications 3 et 6, **caractérisé par le fait que** le cavalier (6) lit le signal de commande via l'entrée du commutateur de sécurité (1), qui signale la connexion directe de la fiche (3) ou du câblage au commutateur de sécurité (1).

8. Système de sécurité selon la revendication 5, **caractérisé par le fait qu'**un bouton de démarrage (5) est connecté entre le commutateur de sécurité (1) et la fiche (3) ou le câblage.

9. Système de sécurité selon les revendications 2 et 8, **caractérisé par le fait que** le bouton de démarrage (5) est connecté à une entrée du commutateur de sécurité (1) au moyen de la fiche intermédiaire (7), un signal de commande étant généré à l'entrée qui signale la connexion du bouton de démarrage (5).

10. Système de sécurité selon la revendication 6, **caractérisé par le fait que** la fiche intermédiaire (7) forme une dérivation du pont (6) de la fiche (3) ou du câblage.
